# EUROPÄISCHE PATENTSCHRIFT

(11) **EP 2 314 804 B1**
(45) Veröffentlichungstag und Bekanntmachung des Hinweises auf die Patenterteilung: **11.07.2012**
(21) Anmeldenummer: 10178790.1
(22) Anmeldetag: 11.05.2007
(51) Int. Cl.: E05B 7/00

(54) **Griffeinheit für eine Betätigungsvorrichtung**
Gripping unit for an actuation device
Unité de saisie pour un dispositif d'actionnement

(30) Priorität: 18.05.2006 DE 102006023634
(43) Veröffentlichungstag der Anmeldung: 27.04.2011
(62) Teilanmeldung aus: 07729021.1
(73) Patentinhaber: Huf Hülsbeck & Fürst GmbH & Co. KG, 42551 Velbert (DE)
(72) Erfinder: Müller, Ralph, 42549 Velbert (DE)
(74) Vertreter: Vogel, Andreas

(56) Entgegenhaltungen:
- EP-A1- 1 149 966
- EP-A1- 1 696 089
- WO-A1-01/16446
- WO-A1-2005/038176
- DE-A1- 10 001 010
- DE-A1- 10 353 977
- DE-A1- 19 722 551
- DE-A1- 19 856 902
- LOSOTO A P ET AL: "CURRENT TRENDS IN THE DEVELOPMENT AND PRODUCTION OF MAGNETICALLY HARD MAGNETIC PLASTICS. GENERAL ASPECTS OF PRODUCTION TECHNOLOGY FOR MAGNETIC PLASTICS", INTERNATIONAL POLYMER SCIENCE AND TECHNOLOGY, RAPRA TECHNOLOGY, SHREWABURY, GB, Bd. 26, Nr. 9, 1. Januar 1999 (1999-01-01) , Seiten T31-T39, XP000928567, ISSN: 0307-174X

## Beschreibung

Die Erfindung betrifft eine Griffeinheit für eine Betätigungsvorrichtung einer Fahrzeugtür, Klappe oder dergleichen, mit einem bewegbaren Griffelement, das mit einem ersten und einem zweiten Ende ausgeführt ist, die innenseitig an der Fahrzeugtür anordbar sind, wobei das Griffelement am ersten Ende an einem ersten feststehenden Element gelagert ist, einem zweiten feststehenden Element, das benachbart zum zweiten Ende des Griffelementes angeordnet ist, wobei während des Bewegens des Griffelementes die feststehenden Elemente mit dem Griffelement an Kontaktierungsflächen sich berühren. Des Weiteren bezieht sich die Erfindung auf ein Verfahren zur Herstellung der genannten Griffeinheit.

Dem Fachmann ist eine Vielzahl an Griffeinheiten mit einem bewegbaren Griffelement und einem feststehenden Element, das benachbart zum Griffelement angeordnet ist, bekannt. Während der Benutzer am Griffelement zieht und dieses somit aus der Tür bewegt, hat es sich nachteiligerweise gezeigt, dass ungewollte Geräuschentwicklungen entstehen.

Das Griffelement sowie das feststehende Element sind in der Regel aus einem verstärkten Kunststoff hergestellt, wobei während des Bewegens des Griffelementes das feststehende Element mit dem Griffelement sich an Kontaktierungsflächen berühren und somit aufgrund der Gleitreibung Geräusche entstehen können.

Ein weiterer Nachteil ist, dass bekannte Griffelemente ein gewisses Spiel innerhalb der Griffeinheit aufweisen, welches mit einer Kippneigung des Griffelementes verbunden ist.

Die Druckschriften DE 100 01 010 A1 und DE 197 22 551 A1 offenbaren Griffeinheiten aus unterschiedlichen Kunststoffen, die sich jedoch nicht zur Geräuschreduzierung eignen. Die Druckschrift WO 01/16 446 A1 offenbart eine Griffeinheit mit einem Magneten und einem Hallsensor.

Es ist Aufgabe der vorliegenden Erfindung eine Griffeinheit sowie ein Verfahren zur Herstellung der Griffeinheit für eine Betätigungsvorrichtung einer Fahrzeugtür, Klappe oder dergleichen zu schaffen, bei denen die genannten Nachteile vermieden werden, insbesondere eine Griffeinheit bereitgestellt wird, die einfach gestaltet ist, ohne erheblichen Aufwand hergestellt werden kann und dem Benutzer auf komfortable und sichere Weise eine nahezu geräuschlose Betätigung der Griffeinheit ermöglicht.

Zur Lösung dieser Aufgabe wird eine Griffeinheit mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Griffeinheit einen ersten Kunststoff aufweist und mit zumindest einer Kontaktierungsfläche aus einem zweiten Kunststoff ausgestaltet ist, der eine geringere Festigkeit aufweist als der erste Kunststoff, wobei diese Kontaktierungsfläche mit dem jeweiligen Element der Griffeinheit einstückig verbunden ist. Der zweite Kunststoff kann beispielsweise aus einem unverstärkten Kunststoff ausgeführt sein. Unter der Bezeichnung erster und/oder zweiter Kunststoff ist ebenfalls mit umfasst, dass der erste und/oder der zweite Kunststoff ein Verbund oder eine Mischung aus zumindest zwei verschiedenen Einzelkunststoffen sein kann.

Während der Benutzer das Griffelement betätigt, gleiten die Kontaktierungsflächen aneinander ab, wobei zumindest eine Kontaktierungsfläche aus dem eine geringe Festigkeit aufweisenden zweiten Kunststoff ausgeführt ist. Durch den Einsatz des zweiten "weicheren" Kunststoffes hat sich gezeigt, dass die Geräuschentwicklung wesentlich reduziert werden kann. Der erste eine größere Festigkeit aufweisende Kunststoff kann Glasfasern und/oder Kohlenstofffasern und/oder Aramidfasern aufweisen. Der erste Kunststoff kann zum Beispiel ein Polyamid (PA), ein Polyoxymethylen (POM), ein Acryl-Butadien-Styrol (ABS) oder ein PBT sein, die jeweils einen bestimmten Glasfaseranteil aufweisen. Das Griffelement und die feststehenden Elemente sind somit aus dem ersten eine größere Festigkeit aufweisenden Kunststoff ausgeführt, wobei selbstverständlich das Griffelement sowie die feststehenden Element sich in ihrem Material unterscheiden können. Das Wesentliche dieser Erfindung ist, dass zumindest eine Kontaktierungsfläche aus dem zweiten Kunststoff hergestellt ist, der vorzugsweise am jeweiligen Element der Griffeinheit angespritzt ist, wodurch eine einstückige Verbindung der Kontaktierungsfläche, die in dieser Erfindung auch als Gleitstück wirkt, mit dem Griffelement und/oder den feststehenden Elementen erzielt wird. Das erste und das zweite feststehende Element sind vorzugsweise an einem Träger angeordnet, der innenseitig der Fahrzeugtür befestigt ist.

Vorteilhafterweise sind die Kontaktierungsflächen sowohl am Griffelement als auch an den feststehenden Elementen aus dem zweiten Kunststoff ausgeführt. In einer bevorzugten Ausführungsform der Griffeinheit ist die Kontaktierungsfläche an der dem feststehenden Element zugewandten Seite des zweiten Endes des Griffelementes angeordnet. Alternativ und/oder zusätzlich ist die aus dem zweiten Kunststoff ausgestaltete Kontaktierungsfläche an der dem Griffelement zugewandten Seite des feststehenden Elementes positioniert. Hierbei kann der zweite Kunststoff ein Material aus POM, PBT, PA oder ABS sein. Ebenfalls ist es denkbar, dass der zweite Kunststoff ein Material aus PBT/PC und/oder aus ABS/PC oder eine Mischung aus den genannten Materialien ist.

Vorteilhafterweise sind die Kontaktierungsflächen am Griffelement sowie an den feststehenden Elementen durch ein Mehrkomponenten-Spritzgussverfahren angeordnet. Beispielsweise kann ein 2K-Spritzgussverfahren zum Einsatz kommen, bei dem nach dem Erstarren des ersten Kunststoffes der zweite Kunststoff mit einem Spritzaggregat angespritzt wird, wodurch zwei unterschiedliche Kunststoffe mit unterschiedlichen Eigenschaften in ihrer Festigkeit, elektrischer Leitfähigkeit etc. formschlüssig und/oder stoffschlüssig miteinander verbunden werden können.

In einer alternativen Ausführungsform der Griffeinheit können die Kontaktierungsflächen des bewegbaren Griffelementes aus einem zweiten Kunststoff ausgeführt sein, der materialunterschiedlich zur Kontaktierungsfläche des feststehenden Elementes ist. Das bedeutet, dass zum Beispiel die jeweilige Kontaktierungsfläche des Griffelementes aus POM und die Kontaktierungsfläche des feststehenden Elementes aus ABS bestehen kann.

In einer alternativen Ausführungsform ist es denkbar, die Kontaktierungsfläche vorsprungartig am jeweiligen Element der Griffeinheit anzuordnen. Während der Bewegung des Griffelementes berühren sich die Kontaktierungsflächen zu jeder Zeit. Ebenfalls ist es denkbar, dass kurzzeitig das Griffelement das erste und das zweite feststehende Element an den genannten Kontaktierungsflächen berührt.

Eine verbessernde Maßnahme sieht vor, dass mindestens zwei Kontaktierungsflächen am Griffelement, insbesondere am zweiten Ende sowie am zugehörigen zweiten feststehenden Element angeordnet sind, wobei die Kontaktierungsflächen des jeweiligen Elementes zueinander beabstandet sind. Hierdurch kann eine gute Führung des Griffelementes während seiner Bewegung entlang der Kontaktierungsfläche des feststehenden Elementes erreicht werden. Ebenfalls vorteilhaft kann sein, dass das erste und/oder das zweite Ende des Griffelementes und/oder die feststehenden Elemente der Griffeinheit vollständig oder zumindest teilweise durch den zweiten Kunststoff umgeben sind.

Vorteilhafterweise ist die Kontaktierungsfläche mit einer leicht gewölbten Oberfläche ausgeführt, wodurch eine geräuschlose Betätigung des Griffelementes begünstigt wird.

In einer weiteren Alternative der Erfindung weist die Griffeinheit einen ersten Trägerbereich auf, an dem die Kontaktierungsfläche angespritzt ist. Hierbei kann der erste Trägerbereich sowohl am bewegbaren Griffelement als auch an den feststehenden Elementen angeordnet sein. Dieser Trägerbereich ist vorzugsweise einstückig und materialeinheitlich mit dem Griffelement bzw. mit dem feststehenden Element verbunden. Besonders vorteilhaft ist, dass die zuverlässige Befestigung der Kontaktierungsfläche an der Griffeinheit durch eine entsprechende konstruktive Ausgestaltung des Trägerbereiches unterstützt werden kann.

In einer möglichen Alternative weist die Griffeinheit einen zweiten Trägerbereich auf, an dem ein Magnet angeordnet ist, der mit einem an der Griffeinheit angeordneten Hallsensor zusammen wirkt. In einer möglichen Ausgestaltungsform ist der Magnet am feststehenden Element und der Hallsensor am bewegbaren Griffelement angeordnet. Falls der Benutzer am Griffelement zieht, wird diese Bewegung durch den Hallsensor detektiert, der wiederum ein entsprechendes Signal einer innerhalb des Fahrzeuges oder innerhalb der Griffeinheit angeordneten Steuereinheit weiter gibt. Selbstverständlich können der Hallsensor alternativ am feststehenden Element und der Magnet am beweglichen Griffelement befestigt sein.

Zweckmäßigerweise ist der zweite Trägerbereich durch eine Kunststoffschicht vollständig bedeckt. In einer Ausführungsform ist der zweite Trägerbereich mit einer Vertiefung ausgebildet, in der der Magnet angeordnet ist. Die genannte Kunststoffschicht bedeckt somit den Magneten, so dass dieser geschützt innerhalb der Vertiefung verbleibt und zuverlässig mit dem Hallsensor zusammen wirken kann.

Alternativ kann die Kunststoffschicht durch einen magnetisierbaren Kunststoff gebildet sein, der am zweiten Trägerbereich angespritzt ist. Vorzugsweise besteht der magnetisierbare Kunststoff aus einer magnetisierbaren Mischung aus Polymeren und Ferrit. Nachdem der magnetisierbare Kunststoff am zweiten Trägerbereich angespritzt ist, wird dieser magnetisiert und kann mit dem dazugehörigen Hallsensor entsprechend wirken.

Vorteilhafterweise weist der erste und/oder der zweite Trägerbereich vorsprungsartige Rippen und/oder Vertiefungen auf, die eine zuverlässige Befestigung der Kontaktierungsflächen bewirken.

Die genannte Aufgabe wird des Weiteren durch ein Verfahren gemäß des unabhängigen Anspruches 20 gelöst, wobei es die Schritte aufweist, dass zunächst das Griffelement und die feststehenden Elemente aus einem ersten Kunststoff hergestellt werden und anschließend zumindest eine Kontaktierungsfläche aus einem zweiten Kunststoff, der eine geringere Festigkeit als der erste Kunststoff aufweist, an definierten Bereichen der Griffeinheit angespritzt wird. Der Grundkörper des Griffelementes sowie des feststehenden Elementes wird in der Regel durch ein Spritzgussverfahren hergestellt. Die Grundkörper können bereits an definierten Stellen Trägerbereiche aufweisen, an die im nächsten Schritt die Kontaktierungsfläche aus dem zweiten Kunststoff angespritzt wird. In den abhängigen Ansprüchen sind bevorzugte Ausführungsformen ausgeführt.

In einer möglichen Ausführungsform der Erfindung wird das erste Ende vollständig durch den zweiten Kunststoff umspritzt. Ferner wird der zweite Kunststoff an der dem ersten feststehenden Element zugewandten Seite des zweiten Endes und an Trägerbereichen des ersten feststehenden Elementes angespritzt.

Vorteilhafterweise wird während und/oder nach dem Schritt b) des Anspruches 20 an einem zweiten Trägerbereich der Griffeinheit eine Kunststoffschicht angespritzt, wobei dieser Bereich des zweiten Trägerbereiches als Magnet wirkt.

In einer vorteilhaften Ausführungsform des Verfahrens ist die Kunststoffschicht aus einem magnetisierbaren und spritzfähigen Kunststoff gebildet. Der magnetisierbare Kunststoff wird nach dem Spritzvorgang durch Einlegen eines externen Magnetfeldes magnetisiert.

Ebenfalls ist es möglich, in den zweiten Trägerbereich einen Permanentmagneten anzuordnen, bevor der Verfahrensschritt gemäß Anspruch 21 durchgeführt wird. Ist der Magnet im zweiten Trägerbereich befestigt, wird die Kunststoffschicht auf den zweiten Trägerbereich angespritzt, wobei der Magnet vollständig durch die Kunststoffschicht abgedeckt ist.

Zweckmäßigerweise wirkt der Permanentmagnet oder die magnetisierte Kunststoffschicht am zweiten Trägerbereich mit einem an der Griffeinheit angeordneten Hallsensor zusammen.

Besonders vorteilhaft ist, dass der zweite Kunststoff und/oder der magnetisierbare Kunststoff durch ein Mehrkomponenten-Spritzgussverfahren an die Griffeinheit, insbesondere an das bewegbare Griffelement und an die feststehenden Elemente angespritzt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Griffeinheit mit einem bewegbaren Griffelement sowie einem feststehenden Element,
- Figur 2: eine rein schematische Darstellung einer möglichen Griffeinheit in Draufsicht,
- Figur 3: eine Ansicht auf das feststehende Element gemäß II-II aus Figur 2,
- Figur 4: eine Schnittansicht am ersten Trägerbereich gemäß Schnittlinie III - III aus Figur 3 und
- Figur 5: eine dreidimensionale Seitenansicht auf ein bewegbares Griffelement mit Kontaktierungsflächen.

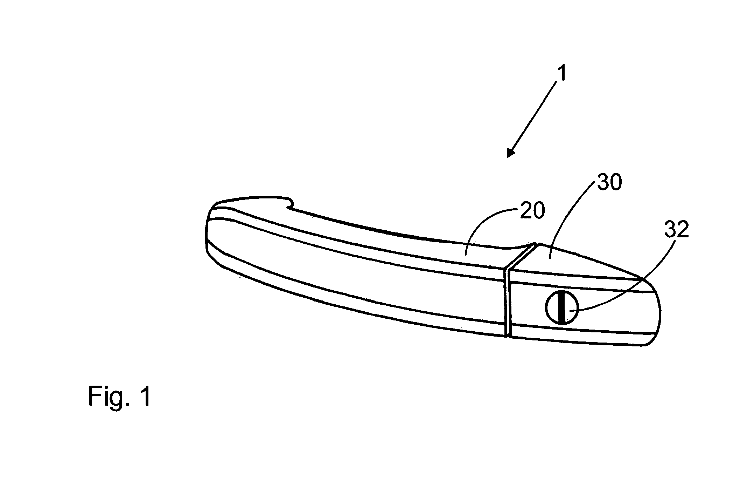

In Figur 1 ist eine mögliche Ausführungsform einer Griffeinheit 1 für eine Betätigungsvorrichtung einer Fahrzeugtür 2 dargestellt, wobei die Griffeinheit 1 ein bewegbares Griffelement 20, ein erstes feststehendes Element 24 und ein zweites feststehendes Element 30 aufweist. Wie in dieser Darstellung zu erkennen ist, ist im feststehenden Element 30 ein Zylinderschloss 32 zum manuellen Schließen und Öffnen des Türschlosses angeordnet. Die Elemente 24,30 sind an einem nicht dargestellten Träger angeordnet, der innenseitig der Tür 2 befestigt ist.

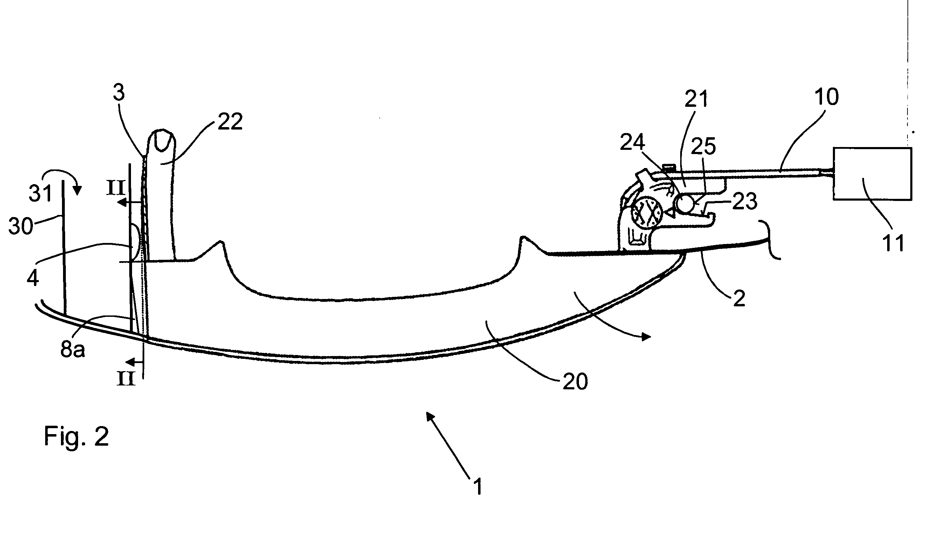

In Figur 2 ist eine Draufsicht auf die Griffeinheit 1 gezeigt, wobei das zweite feststehende Element 30 rein schematisch dargestellt ist. Das zweite feststehende Element 30 ist mit einem Zylinderturm 31 ausgeführt, in dem das Zylinderschloss 32 angeordnet werden kann. In weiteren möglichen Ausführungsformen der Griffeinheit 1 kann der Zylinderturm 31 ohne jegliche Elemente leer bleiben.

Das bewegbare Griffelement 20 ist mit einem ersten 21 und einem zweiten Ende 22 ausgeführt, die innenseitig an der Fahrzeugtür 2 sich befinden. Das Griffelement 20 ist am ersten Ende 21 um eine Drehachse, die das feststehende Element 24 aufweist, drehbar gelagert. Ferner ist das Griffelement 20 mit einem nicht dargestellten Hohlraum ausgeführt, in dem eine Elektronikeinheit sich befindet. Die Verbindung von der genannten Elektronikeinheit zur fahrzeugseitigen Elektronik wird durch die elektrische Leitung 10 sowie den schematisch dargestellten Stecker 11 erreicht.

Das bewegbare Griffelement 20 mit seinem ersten und seinem zweiten Ende 21,22 sowie das feststehende Element 30 sind Spritzgussteile aus einem ersten Kunststoff. Am zweiten Ende 22 des Griffelementes 20 sind Kontaktierungsflächen 3 aus einem zweiten Kunststoff angeordnet. Das benachbart zum Griffelement 20 erste feststehende Element 30 weist ebenfalls eine Kontaktierungsfläche 4 auf. Des Weiteren ist das erste Ende 21 haken- beziehungsweise gabelförmig mit zwei Schenkeln ausgeführt, die innenseitig die Drehachse 24 kontaktieren. Das erste Ende 21 ist mit dem zweiten "weicheren" Kunststoff umspritzt, so dass die Innenseiten der Schenkel Kontaktierungsflächen 23 für die Drehachse 24 bilden, die ebenfalls eine aus dem zweiten Kunststoff bestehende Kontaktierungsfläche 25 umfangsseitig aufweist.

Die genannten Kontaktierungsflächen 3,4,23,25 sind aus einem zweiten Kunststoff ausgestaltet, der eine geringere Festigkeit als der erste Kunststoff aufweist. Erfindungsgemäß sind die Kontaktierungsflächen 3,4,23,25 durch ein Mehrkomponenten-Spritzgussverfahren an dem jeweiligen Element 21,22,24,30 angespritzt. Selbstverständlich können sich die Kontaktierungsflächen 3,4,23,25 hinsichtlich des Materials voneinander unterscheiden. Ebenfalls ist es denkbar, dass der zweite Kunststoff eine Mischung aus mehreren Einzelkunststoffen ist.

In Ruheposition des Griffelementes 20 berührt die eine gewölbte Oberfläche aufweisende Kontaktierungsfläche 4 den unteren Bereich der Kontaktierungsfläche 3. Während der Benutzer am Griffelement 20 zieht, schwenkt dieses um seine Drehachse 24 gegen den Uhrzeigersinn, wobei die Kontaktierungsfläche 3 des Griffelementes 20 entlang der feststehenden Kontaktierungsfläche 4 gleitet. Gleichzeitig gleitet die Kontaktierungsfläche 23 and der Kontaktierungsfläche 25 der Drehachse 24 ab. Da die Kontaktierungsflächen 3,4,23,25 aus einem entsprechenden weicheren zweiten Kunststoff bestehen, unterliegen die sich berührenden Teile der Griffeinheit 1 einem sehr geringen Verschleiß. Durch den Einsatz der genannten Kontaktierungsflächen 3,4,23,25 wird zusätzlich eine entsprechende Kippsicherheit des beweglichen Griffelementes 20 erzielt. In einer weiteren nicht dargestellten Alternative besteht ebenfalls die Möglichkeit lediglich ein Element 21,22,24,30 der Griffeinheit 1 mit einer aus dem zweiten Kunststoff ausgebildeten Kontaktierungsfläche 3,4,23,25 zu versehen.

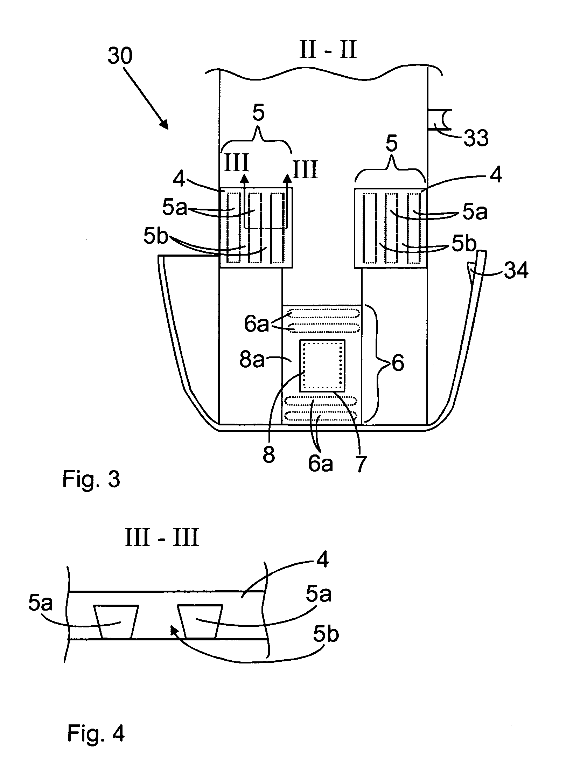

Wie Figur 2 zeigt, ist eine Kunststoffschicht 8a am feststehenden Element 30 angeordnet. Der Bereich der Kunststoffschicht 8a wirkt als Magnet, der mit einem nicht dargestellten Hallsensor am bewegbaren Griffelement 20 zusammenarbeitet. Wie die Kontaktierungsflächen 3,4,23,25 ist auch die Kunststoffschicht 8a durch ein Mehrkomponenten-Spritzgussverfahren an der Griffeinheit 1 angespritzt. Damit eine zuverlässige Befestigung der Kontaktierungsflächen 3,4 sowie der Kunststoffschicht 8a am jeweiligen Element 20,30 erzielbar ist, sind erste Trägerbereiche 5 vorgesehen, die in Figur 3 dargestellt sind. An diese Trägerbereiche 5 werden zwei Kontaktierungsflächen 4 angespritzt. Die Trägerbereiche 5 sind durch vorsprungartige Rippen 5a gebildet, die jeweils einen bestimmten Abstand zueinander aufweisen. Des Weiteren weist das feststehende Element 30 einen zweiten Trägebereich 6 auf, der eine Vertiefung 7 aufweist, in der ein Permanentmagnet 8 sich befindet. Die Vertiefung 7 ist entsprechend der Form des Magneten 8 ausgebildet. Zudem ist der zweite Trägerbereich 6 mit streifenförmigen Vertiefungen 6a ausgebildet. Im angespritzten Zustand der Kunststoffschicht 8a sind diese Vertiefungen 6a vollständig durch das Material der Kunststoffschicht 8a ausgefüllt, wobei der Magnet 8 durch die angespritzte Kunststoffschicht 8a verdeckt ist. Ferner weist das feststehende Element 30 Befestigungselemente 33 sowie Arretierungsmittel 34 für einen zuverlässigen Halt an der Fahrzeugtür 2 auf.

In Figur 4 ist eine mögliche Ausgestaltung der Rippen 5a gezeigt, deren Rippenbreiten zum freien Ende der jeweiligen Rippe 5a leicht zunimmt. Nachdem die Kontaktierungsfläche 4 am ersten Trägerbereich 5 aufgespritzt ist, sind die Rippen 5a mit dem zweiten Kunststoff bedeckt, wobei die Nuten 5b zwischen den Rippen 5a vollständig mit dem zweiten Kunststoff ausgefüllt sind. Die in Figur 4 dargestellte Form der Rippen 5a begünstigt eine formschlüssige Verbindung der Kontaktierungsfläche 4 am feststehenden Element 30. Selbstverständlich sind alternative Ausgestaltungen der Rippen 5a denkbar. Beispielsweise können anstelle von Rippen 5a Vertiefungen - entsprechend des zweiten Trägerbereiches 6 - zum Einsatz kommen.

Anstelle eines Magneten 8 in die Vertiefung 7 anzuordnen, besteht in einer weiteren Alternative der Erfindung die Möglichkeit, die Kunststoffschicht 8a durch einen magnetisierbaren Kunststoff auszubilden, der an dem zweiten Trägerbereich 6 angespritzt wird.

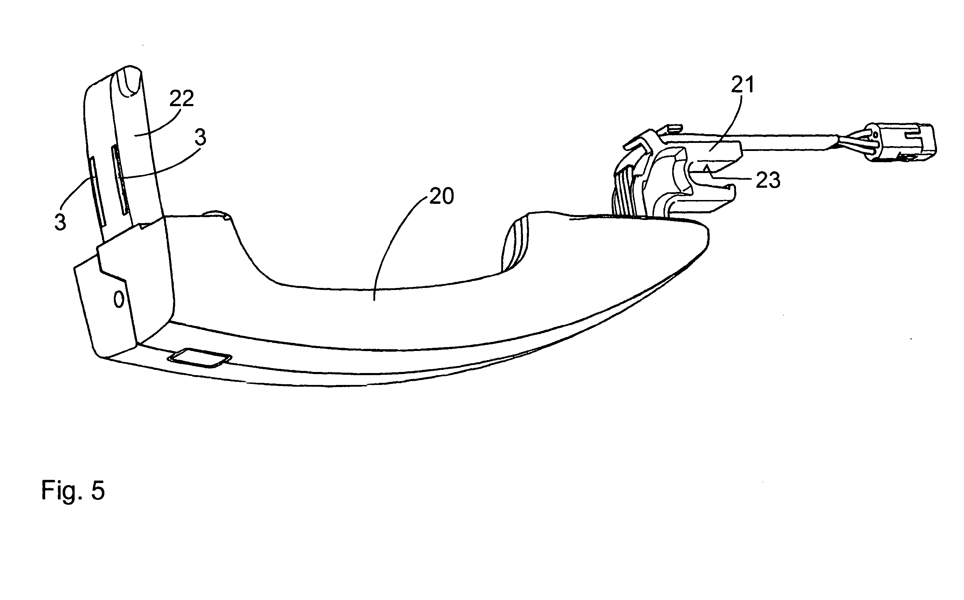

Figur 5 zeigt exemplarisch Kontaktierungsflächen 3 des Griffelementes 20, die am zweiten Ende 22 des Griffelementes 20 angeordnet sind. Bei dieser Ausführungsform sind die Kontaktierungsflächen 3 streifenförmig in einem Abstand zueinander ausgebildet. Wie beim ersten feststehenden Element 30 kann in einer alternativen, nicht dargestellten Ausführungsform der Erfindung die Drehachse 24 und das Griffelement 20 am ersten 21 und am zweiten Ende 22 entsprechend ausgebildete Trägerbereiche aufweisen, an denen die Kontaktierungsflächen 3,23,25 angespritzt sind.

Die Griffeinheit 1 wird derart hergestellt, dass zunächst das bewegbare Griffelement 20 sowie die feststehenden Elemente 24,30 aus dem eine höhere Festigkeit aufweisenden ersten Kunststoff gespritzt werden. Beispielsweise kann der erste Kunststoff einen bestimmten Anteil an Glasfasern aufweisen, der je nach Festigkeitsanforderung variiert werden kann. Das aus dem ersten Kunststoff hergestellte Griffelement 20 sowie die feststehenden Elemente 24,30 stellen den Grundkörper der Griffeinheit 1 dar. Das erste feststehende Element 30 ist bereits mit den Trägerbereichen 5,6 ausgeführt.

Im darauf folgenden zweiten Schritt werden die Kontaktierungsflächen 3,4,23,25 aus dem zweiten Kunststoff an definierten Bereichen des Griffelementes 20 und der feststehenden Elemente 24,30 angespritzt. Im vorliegenden Ausführungsbeispiel ist das erste Ende 21 des Griffelementes 20 sowie die Drehachse 24 vollständig durch den zweiten Kunststoff umgeben, durch den die Kontaktierungsflächen 23,25 gebildet sind. Hingegen sind die Kontaktierungsflächen 3 lediglich an der dem feststehenden Element 30 zugewandten Seite des zweiten Endes 22 an definierten Bereichen angespritzt, wobei die Kontaktierungsflächen 3 streifenförmig sind und einen Abstand zueinander aufweisen. Zudem sind die Kontaktierungsflächen 4 des feststehenden Elementes 30 ebenfalls an definierten Bereichen, hier an den Trägerbereichen 5 angeordnet.

Während und/oder nach dem zweiten Schritt kann an dem zweiten Trägerbereich 6 der Griffeinheit 1 die Kunststoffschicht 8a angespritzt werden, wobei zuvor in die Vertiefung 7 der Magnet 8 eingelegt worden ist. Falls die Kunststoffschicht 8a aus einem magnetisierbaren Kunststoff gebildet ist, wird, nachdem die Kunststoffschicht 8a an dem zweiten Trägerbereich 6 angespritzt worden ist, durch ein Anlegen eines externen Magnetfeldes die Kunststoffschicht 8a magnetisiert. Anschließend wirkt die Kunststoffschicht 8a als Magnet.

Die Kunststoffschicht 8a kann aus demselben zweiten Kunststoff bestehen wie die Kontaktierungsfläche 4. Ebenfalls kann die Kunststoffschicht 8a als Gleitfläche dienen, an der die Kontaktierungsfläche 3 des Griffelementes 20 entlang gleiten kann.

Es hat sich als vorteilhaft erwiesen, dass der Ferritanteil in der magnetisierbaren Mischung der Kunststoffschicht 8a in einem Bereich von 20 bis 60 %, vorteilhafterweise zwischen 30 und 50 % liegt. Hierdurch werden gute magnetische Eigenschaften der Kunststoffschicht 8a ermöglicht.

### Bezugszeichenliste

- 1: Griffeinheit
- 2: Fahrzeugtür
- 3: Kontaktierungsfläche
- 4: Kontaktierungsfläche
- 5: erster Trägerbereich
- 5a: Rippen
- 5b: Nuten
- 6: zweiter Trägerbereich
- 6a: Vertiefungen
- 7: Vertiefung
- 8: Magnet
- 8a: Kunststoffschicht
- 10: elektrische Leitung
- 11: Stecker
- 20: bewegbares Griffelement
- 21: erstes Ende des Griffelementes
- 22: zweites Ende des Griffelementes
- 23: Kontaktierungsfläche
- 24: erstes feststehendes Element
- 25: Kontaktierungsfläche
- 30: zweites feststehendes Element
- 31: Zylinderturm
- 32: Zylinderschloss
- 33: Befestigungselement
- 34: Arretierungsmittel

## Patentansprüche

1. Griffeinheit (1) für eine Betätigungsvorrichtung einer Fahrzeugtür (2), Klappe oder dergleichen, mit
einem bewegbaren Griffelement (20), das mit einem ersten (21) und einem zweiten Ende (22) ausgeführt ist, die innenseitig an der Fahrzeugtür (2) anordbar sind, wobei das Griffelement (20) am ersten Ende (21) an einem ersten feststehenden Element (24) gelagert ist,
einem zweiten feststehenden Element (30), das benachbart zum zweiten Ende (22) des Griffelementes (20) angeordnet ist,
wobei während des Bewegens des Griffelementes (20) die feststehenden Elemente (24,30) mit dem Griffelement (20) an Kontaktierungsflächen (3,4,23,25) sich berühren,
**dadurch gekennzeichnet,**
**dass** die Griffeinheit (1) einen ersten Kunststoff aufweist und mit zumindest einer Kontaktierungsfläche (3,4,23,25) aus einem zweiten Kunststoff ausgestaltet ist, der eine geringere Festigkeit aufweist als der erste Kunststoff, wobei diese Kontaktierungsfläche (3,4,23,25) mit dem jeweiligen Element (24,20,30) der Griffeinheit (1) einstückig verbunden ist, wobei die Griffeinheit (1) einen zweiten Trägerbereich (6) aufweist, an dem ein Magnet (8) angeordnet ist, der mit einem an der Griffeinheit (1) angeordneten Hallsensor zusammenwirkt, wobei der zweite Trägerbereich (6) durch eine Kunststoffschicht (8a) vollständig bedeckt ist, wobei die Kunststoffschicht (8a) als Gleitfläche dient, an der die dem feststehenden Element zugewandte Kontaktierungsfläche (3) des Griffelementes (20) entlang gleitbar ist.

2. Griffeinheit (1) nach Anspruch 1,
**dadurch gekennzeichnet,**
**dass** die Kontaktierungsfläche (3,4,23,25) durch ein Mehrkomponenten-Spritzgussverfahren mit der Griffeinheit (1) verbunden ist.

3. Griffeinheit (1) nach Anspruch 1 oder 2,
**dadurch gekennzeichnet,**
**dass** die Kontaktierungsfläche (3) an der dem feststehenden Element (30) zugewandten Seite des zweiten Endes (22) des Griffelementes (20) angeordnet ist.

4. Griffeinheit (1) nach einem der vorhergehenden Ansprüche,
**dadurch gekennzeichnet,**
**dass** die Kontaktierungsfläche (4) an der dem Griffelement (20) zugewandten Seite des feststehenden Elementes (30) angeordnet ist.

5. Griffeinheit (1) nach einem der vorhergehenden Ansprüche,
**dadurch gekennzeichnet,**
**dass** die Kontaktierungsfläche (23) am ersten Ende (21) des Griffelementes (20) angeordnet ist.

6. Griffeinheit (1) nach einem der vorhergehenden Ansprüche,
**dadurch gekennzeichnet,**
**dass** der erste und/oder der zweite Kunststoff ein Verbund aus zumindest zwei Einzelkunststoffen ist.

7. Griffeinheit (1) nach einem der vorhergehenden Ansprüche,
**dadurch gekennzeichnet,**
**dass** der erste Kunststoff Glasfasern und/oder Kohlenstofffasern und/oder Aramidfasern aufweist, wobei insbesondere der zweite Kunststoff ein Material aus POM, PBT, PA, ABS oder aus PBT/PC und/oder aus ABS/PC ist.

8. Griffeinheit (1) nach einem der vorhergehenden Ansprüche,
**dadurch gekennzeichnet,**
**dass** die Kontaktierungsfläche (3,4) vorsprungsartig am jeweiligen Element (20,30) angeordnet istund/oder dass mindestens zwei Kontaktierungsflächen (3,4) am zweiten Ende (22) des Griffelementes (20) sowie am feststehenden Element (30) angeordnet sind, wobei die Kontaktierungsflächen (3,4) des jeweiligen Elementes (20,30) zueinander beabstandet sind.

9. Griffeinheit (1) nach einem der vorhergehenden Ansprüche,
**dadurch gekennzeichnet,**
**dass** das erste (21) und/oder das zweite Ende (22) vollständig durch den zweiten Kunststoff umgeben sind und/oder dass die Kontaktierungsfläche (3,4,23,25) eine gewölbte Oberfläche aufweist.

10. Griffeinheit (1) nach einem der vorhergehenden Ansprüche,
**dadurch gekennzeichnet,**
**dass** die Griffeinheit (1) einen ersten Trägerbereich (5) aufweist, an dem die Kontaktierungsfläche (4) angespritzt ist.

11. Griffeinheit (1) nach einem der vorhergehenden Ansprüche,
**dadurch gekennzeichnet,**
**dass** der zweite Trägerbereich (6) eine Vertiefung (7) aufweist, in der der Magnet (8) angeordnet ist.

12. Griffeinheit (1) nach Anspruch 1,
**dadurch gekennzeichnet,**
**dass** die Kunststoffschicht (8a) durch einen magnetisierbaren Kunststoff gebildet ist, der am zweiten Trägerbereich (6) angespritzt ist, wobei insbesondere der magnetisierbare Kunststoff aus einer magnetisierbaren Mischung aus Polymeren und Ferrit besteht.

13. Griffeinheit (1) nach einem der vorhergehenden Ansprüche,
**dadurch gekennzeichnet,**
**dass** der Trägerbereich (5,6) durch vorsprungsartige ausgeführte Rippen (9b) und/oder Vertiefungen (6a) gebildet ist.

14. Verfahren zur Herstellung einer Griffeinheit (1) für eine Betätigungsvorrichtung einer Fahrzeugtür (2), Klappe oder dergleichen, mit
einem bewegbaren Griffelement (20), das mit einem ersten (21) und einem zweiten Ende (22) ausgeführt ist, die innenseitig an der Fahrzeugtür (2) anordbar sind, wobei das Griffelement (20) am ersten Ende (21) an einem ersten feststehenden Element (24) gelagert ist,
einem zweiten feststehenden Element (30), das benachbart zum zweiten Ende (22) des Griffelementes (20) angeordnet ist,
wobei während des Bewegens des Griffelementes (20) die feststehenden Elemente (24,30) mit dem Griffelement (20) an Kontaktierungsflächen (3,4,23,25) sich berühren, **gekennzeichnet durch** folgende Schritte:
a) das Griffelement (20) und die feststehenden Elemente (24,30) werden aus einem ersten Kunststoff hergestellt,
b) zumindest eine Kontaktierungsfläche (3,4,23,25) wird aus einem zweiten Kunststoff, der eine geringere Festigkeit aufweist als der erste Kunststoff, an einem definierten Bereich die Griffeinheit (1) angespritzt,
während und/oder nach dem Schritt b) an einem zweiten Trägerbereich (6) der Griffeinheit (1) eine Kunststoffschicht (8a) angespritzt wird, wobei dieser Bereich als Magnet (8) wirkt, wobei die Kunststoffschicht (8a) als Gleitfläche dient, an der die dem feststehenden Element zugewandte Kontaktierungsfläche (3) des Griffelementes (20) entlang gleitbar ist.

15. Verfahren nach Anspruch 14,
**dadurch gekennzeichnet,**
**dass** gemäß Schritt b)
(1) das erste Ende (21) vollständig durch den zweiten Kunststoff umspritzt wird,
(2) an der dem ersten feststehenden Element (30) zugewandten Seite des zweiten Endes (22) der zweite Kunststoff angespritzt wird,
(3) an Trägerbereichen (5) des ersten feststehenden Elementes (30) der zweite Kunststoff angespritzt wird.

16. Verfahren nach Anspruch 14 oder 15,
**dadurch gekennzeichnet,**
**dass** in den zweiten Trägerbereich (6) ein Magnet (8) angeordnet wird, bevor der Verfahrensschritt gemäß Anspruch 22 durchgeführt wird und/oder dass die Kunststoffschicht (8a) aus einem magnetisierbaren und spritzfähigen Kunststoff gebildet ist, wobei insbesondere der magnetisierbare Kunststoff nach dem Spritzvorgang durch ein Anlegen eines externen Magnetfeldes magnetisiert wird.

17. Verfahren nach einem der vorhergehenden Ansprüche,
**dadurch gekennzeichnet,**
**dass** der zweite Kunststoff und/oder der magnetisierbare Kunststoff durch ein Mehrkomponenten-Spritzgussverfahren an die Griffeinheit (1) angespritzt werden.

18. Verfahren nach einem der Ansprüche 14 bis 17 zur Herstellung einer Griffeinheit (1) nach einem der Ansprüche 1 bis 13.

## Claims

1. Handle unit (1) for an actuation device of a vehicle door (2), flap or the like, with a moveable handle element (20), comprising a first (21) and a second end (22), which can be arranged at the inner surface of the vehicle door (2), wherein the handle element (20) is mounted to a first stationary element (24) at the first end (21),
a second stationary element (30), arranged adjacent to the second end (22) of the handle element (20),
wherein the stationary elements (24, 30) are contacting the contact areas (3, 4, 23, 25) with their handle element (20) during the movement of the handle element (20), **characterized in**
**that** the handle unit (1) comprises a first plastic and is at least shaped with one contact area (3, 4, 23, 25) composed of a second plastic, comprising a minor resistance as the first plastic, wherein this contact area (3, 4, 23, 25) is formed integrally with the respective element (24, 20, 30) of the handle unit (1), wherein the handle unit (1) comprises a second bearing area (6) assembled with a magnet (8) interacting with a hall sensor assembled at the handle unit (1), wherein the second bearing area (6) is completely covered by a plastic layer (8a), wherein the plastic layer (8a) serves as a slide surface, at which the contact area (3) of the handle element (20) can slide alongside facing the stationary element.

2. Handle unit (1) according to claim 1, **characterized in**
**that** the contact area (3, 4, 23, 25) is connected to the handle unit (1) via a multi-component casting procedure.

3. Handle unit (1) according to claim 1 or 2, **characterized in**
**that** the contact area (3) is assembled to the second end (22) of the handle element (20) facing the stationary element (30).

4. Handle unit (1) according to one of the preceding claims, **characterized in that** the contact area (4) is assembled to the stationary element (30) facing the handle element (20).

5. Handle unit (1) according to one of the preceding claims, **characterized in that** the contact area (23) is assembled to the first end (21) of the handle element (20).

6. Handle unit (1) according to one of the preceding claims, **characterized in that** the first and/or the second plastic is a composite of at least two single plastics.

7. Handle unit (1) according to one of the preceding claims, **characterized in that** the first plastic comprises glass fibre and/or carbon fibre and/or aramid fibre, wherein particularly the second plastic is a material out of POM, PBT, PA, ABS or out of PBT/PC and/or out of ABS/PC.

8. Handle unit (1) according to one of the preceding claims, **characterized in that** the contact area (3, 4) is assembled at the respective element (20, 30) in a nose-like way and/or that at least two contact areas (3, 4) are assembled at the second end (22) of the handle element (20) as well as at the stationary element (30), wherein the contact areas (3, 4) of the respective element (20, 30) are spaced to each other.

9. Handle unit (1) according to one of the preceding claims, **characterized in that** the first (21) and/or the second end (22) are completely enclosed by the second plastic and/or that the contact area (3, 4, 23, 25) comprises an arched surface.

10. Handle unit (1) according to one of the preceding claims, **characterized in that** the handle unit (1) comprises a first bearing area (5) at which the contact area (4) is injected.

11. Handle unit (1) according to one of the preceding claims, **characterized in that** the second bearing area (6) comprises a recess (7), in which the magnet (8) is assembled.

12. Handle unit (1) according to claim 1, **characterized in**
**that** the plastic layer (8a) is formed by a magnetic plastic, injected at the second bearing area (6), wherein particularly the magnetic plastic is composed of a magnetic composition of polymers and ferrite.

13. Handle unit (1) according to one of the preceding claims, **characterized in that** the bearing area (5, 6) is formed by nose-like shaped ribs (9b) and/or recesses (6a).

14. Method for constructing a handle unit (1) for an actuation device of a vehicle door (2), flap or the like, with
a moveable handle element (20), comprising a first (21) and a second end (22), which can be arranged at the inner surface of the vehicle door (2), wherein the handle element (20) is mounted to a first stationary element (24) at the first end (21),
a second stationary element (30), arranged adjacent to the second end (22) of the handle element (20),
wherein the stationary elements (24, 30) are contacting the contact area (3, 4, 23, 25) with their handle element (20) during the movement of the handle element (20), **characterized by** the following steps:
a) the handle element (20) and the stationary elements (24, 30) are produced out of a first plastic
b) at least one contact area (3, 4, 23, 25) is made of a second plastic which comprises a minor resistance as the first plastic and is injected to a defined area of the handle unit (1)
during and/or following step b) a plastic layer (8a) is injected to a second bearing area (6) of the handle unit (1), wherein this area acts as magnet (8), wherein the plastic layer (8a) serves as a sliding area, at which the contact area (3) of the handle element (20) can slide alongside facing the stationary element.

15. Method according to claim 14, **characterized in**
**that** according to step b)
(1) the first end (21) is completely coated by a second plastic,
(2) the second plastic is injected at the second end (22) facing the first stationary element (30),
(3) the second plastic is injected at the bearing areas (5) of the first stationary element (30).

16. Method according to claim 14 or 15, **characterized in**
**that** a magnet (8) is assembled in the second bearing area (6), before the method step according to claim 18 is performed and/or that the plastic layer (8a) is made of a magnetic and injectable plastic, wherein particularly the magnetic plastic is magnetised according to the spray process by spreading of an external magnetic field.

17. Method according to one of the preceding claims, **characterized in that** the second plastic and/or the magnetic plastic are injected to the handle unit (1) via a multi-component casting procedure.

18. Method according to one of the claims 14 to 17 for the construction of a handle unit (1) according to claims 1 to 13.

## Revendications

1. Unité de poignée (1) pour un dispositif d'actionnement d'une porte de véhicule (2), d'une trappe ou d'un élément similaire, avec
un élément de poignée mobile (20), qui présente une première extrémité (21) et une deuxième extrémité (22) qui peuvent être disposées du côté intérieur sur la porte de véhicule (2), sachant que l'élément de poignée (20) est monté au niveau de la première extrémité (21) sur un premier élément fixe (24),
un deuxième élément fixe (30), qui est disposé au voisinage de la deuxième extrémité (22) de l'élément de poignée (20),
sachant que, pendant le déplacement de l'élément de poignée (20), les éléments fixes (24, 30) sont en contact avec l'élément de poignée (20) au niveau de surfaces de contact (3, 4, 23, 25),
**caractérisée en ce que** l'unité de poignée (1) présente une première matière plastique et est dotée d'au moins une surface de contact (3, 4, 23, 25) constituée d'une deuxième matière plastique qui est moins résistante que la première matière plastique, sachant que cette surface de contact (3, 4, 23, 25) est assemblée d'un seul tenant à l'élément respectif (24, 20, 30) de l'unité de poignée (1), sachant que l'unité de poignée (1) présente une deuxième région porteuse (6) sur laquelle est disposé un aimant (8) qui coopère avec un capteur à effet Hall disposé sur l'unité de poignée (1), sachant que la deuxième région porteuse (6) est totalement recouverte par une couche de matière plastique (8a), sachant que la couche de matière plastique (8a) sert de surface de glissement, le long de laquelle peut être glissée la surface de contact (3) de l'élément de poignée (20) qui est tournée vers l'élément fixe.

2. Unité de poignée (1) selon la revendication 1, **caractérisée en ce que** la surface de contact (3, 4, 23, 25) est assemblée à l'unité de poignée (1) par un procédé de moulage par injection à plusieurs composants.

3. Unité de poignée (1) selon la revendication 1 ou 2, **caractérisée en ce que** la surface de contact (3) est disposée sur le côté de la deuxième extrémité (22) de l'élément de poignée (20) qui est tourné vers l'élément fixe (30).

4. Unité de poignée (1) selon l'une des revendications précédentes, **caractérisée en ce que** la surface de contact (4) est disposée sur le côté de l'élément fixe (30) qui est tourné vers l'élément de poignée (20).

5. Unité de poignée (1) selon l'une des revendications précédentes, **caractérisée en ce que** la surface de contact (23) est disposée sur la première extrémité (21) de l'élément de poignée (20).

6. Unité de poignée (1) selon l'une des revendications précédentes, **caractérisée en ce que** la première et/ou la deuxième matière plastique est un composite d'au moins deux matières plastiques individuelles.

7. Unité de poignée (1) selon l'une des revendications précédentes, **caractérisée en ce que** la première matière plastique présente des fibres de verre et/ou des fibres de carbone et/ou des fibres d'aramide, sachant notamment que la deuxième matière plastique est un matériau constitué de polyméthylène oxyde, de PBT (téréphtalate de polybutylène), de polyamide, d'ABS (acrylonitrile-butadiène-styrène) ou de PBT/polycarbonate et/ou d'ABS/polycarbonate.

8. Unité de poignée (1) selon l'une des revendications précédentes, **caractérisée en ce que** la surface de contact (3, 4) est disposée à la manière d'une saillie sur l'élément respectif (20, 30), et/ou **en ce qu'**au moins deux surfaces de contact (3, 4) sont disposées sur la deuxième extrémité (22) de l'élément de poignée (20) ainsi que sur l'élément fixe (30), sachant que les surfaces de contact (3, 4) de l'élément respectif (20, 30) sont mutuellement distantes.

9. Unité de poignée (1) selon l'une des revendications précédentes, **caractérisée en ce que** la première extrémité (21) et/ou la deuxième extrémité (22) sont totalement entourées par la deuxième matière plastique, et/ou **en ce que** la surface de contact (3, 4, 23, 25) présente une face supérieure bombée.

10. Unité de poignée (1) selon l'une des revendications précédentes, **caractérisée en ce que** l'unité de poignée (1) présente une première région porteuse (5), sur laquelle la surface de contact (4) est moulée par injection.

11. Unité de poignée (1) selon l'une des revendications précédentes, **caractérisée en ce que** la deuxième région porteuse (6) présente un renfoncement (7) dans lequel est disposé l'aimant (8).

12. Unité de poignée (1) selon la revendication 1, **caractérisée en ce que** la couche de matière plastique (8a) est formée par une matière plastique magnétisable qui est moulée par injection sur la deuxième région porteuse (6), sachant notamment que la matière plastique magnétisable est constituée d'un mélange magnétisable de polymères et de ferrite.

13. Unité de poignée (1) selon l'une des revendications précédentes, **caractérisée en ce que** la région porteuse (5, 6) est formée par des nervures (9b) réalisées à la manière de saillies, et/ou par des renfoncements (6a).

14. Procédé de fabrication d'une unité de poignée (1) pour un dispositif d'actionnement d'une porte de véhicule (2), d'une trappe ou d'un élément similaire, avec un élément de poignée mobile (20), qui présente une première extrémité (21) et une deuxième extrémité (22) qui peuvent être disposées du côté intérieur sur la porte de véhicule (2), sachant que l'élément de poignée (20) est monté au niveau de la première extrémité (21) sur un premier élément fixe (24),
un deuxième élément fixe (30), qui est disposé au voisinage de la deuxième extrémité (22) de l'élément de poignée (20),
sachant que, pendant le déplacement de l'élément de poignée (20), les éléments fixes (24, 30) sont en contact avec l'élément de poignée (20) au niveau de surfaces de contact (3, 4, 23, 25),
**caractérisé par** les étapes suivantes :
a) l'élément de poignée (20) et les éléments fixes (24, 30) sont fabriqués dans une première matière plastique,
b) au moins une surface de contact (3, 4, 23, 25) est moulée par injection, dans une deuxième matière plastique qui est moins résistante que la première matière plastique, sur une région définie de l'unité de poignée (1),
pendant et/ou après l'étape b), une couche de matière plastique (8a) est moulée par injection sur une deuxième région porteuse (6) de l'unité de poignée (1), sachant que cette région joue le rôle d'aimant (8), sachant que la couche de matière plastique (8a) sert de surface de glissement, le long de laquelle peut être glissée la surface de contact (3) de l'élément de poignée (20) qui est tournée vers l'élément fixe.

15. Procédé selon la revendication 14, **caractérisé en ce que**, selon l'étape b) :
(1) la première extrémité (21) est totalement enrobée par injection de la deuxième matière plastique,
(2) la deuxième matière plastique est moulée par injection sur le côté de la deuxième extrémité (22) qui est tourné vers le premier élément fixe (30),
(3) la deuxième matière plastique est moulée par injection sur des régions porteuses (5) du premier élément fixe (30).

16. Procédé selon la revendication 14 ou 15, **caractérisé en ce qu'**un aimant (8) est disposé dans la deuxième région porteuse (6) avant l'exécution de l'étape de procédé selon la revendication 18, et/ou **en ce que** la couche de matière plastique (8a) est constituée d'une matière plastique magnétisable et injectable, sachant notamment que la matière plastique magnétisable est magnétisée après le processus d'injection par l'application d'un champ magnétique externe.

17. Procédé selon l'une des revendications précédentes, **caractérisé en ce que** la deuxième matière plastique et/ou la matière plastique magnétisable sont moulées par injection sur l'unité de poignée (1) par un procédé de moulage par injection à plusieurs composants.

18. Procédé selon l'une des revendications 14 à 17 pour la fabrication d'une unité de poignée (1) selon l'une des revendications 1 à 13.
